(19) **Europäisches Patentamt**
**European Patent Office**
**Office européen des brevets**

(11) **EP 4 495 896 A1**

(12) **EUROPEAN PATENT APPLICATION**
published in accordance with Art. 153(4) EPC

(43) Date of publication:
**22.01.2025 Bulletin 2025/04**

(21) Application number: **23769461.7**

(22) Date of filing: **03.02.2023**

(51) International Patent Classification (IPC):
**G06V 20/10** (2022.01)

(86) International application number:
**PCT/CN2023/074367**

(87) International publication number:
**WO 2023/173950 (21.09.2023 Gazette 2023/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.03.2022 CN 202210273033**

(71) Applicant: **Hangzhou Ezviz Software Co., Ltd.**
**Zhejiang 310051 (CN)**

(72) Inventor: **LOU, Lizheng**
**Hangzhou, Zhejiang 310051 (CN)**

(74) Representative: **Dai, Simin**
**Reyda IP**
**A073**
**157, Quai du Président Roosevelt**
**92130 Issy-les-Moulineaux (FR)**

(54) **OBSTACLE DETECTION METHOD, MOBILE ROBOT, AND MACHINE READABLE STORAGE MEDIUM**

(57) The present disclosure provides an obstacle detection method, a mobile robot, and a machine-readable storage medium. The obstacle detection method includes: acquiring laser data of the target scene through a laser sensor, and acquiring image data of the target scene through an image sensor; and determining first feature information of a target object in the target scene based on the laser data; determining second feature information of a candidate object in the target scene based on the image data; and determining whether the target object is an obstacle based on the first feature information and the second feature information. Through the technical solution of the present disclosure, it is possible to accurately detect obstacles in the target scene based on laser data and image data, better perform obstacle detection and obstacle avoidance, which greatly improves the accuracy of obstacle detection, and greatly reduces the possibility of collision between the mobile robot and the obstacle, and reduces false alarms, achieving obstacle avoidance function.

```
┌──────────────────────────────────────────────────────────┐
│ Determine first feature information of a target object   │  101
│ in a target scene based on laser data                    │
└──────────────────────────────────────────────────────────┘
                            │
                            ▼
┌──────────────────────────────────────────────────────────┐
│ Determine second feature information of a candidate      │  102
│ object in the target scene based on image data           │
└──────────────────────────────────────────────────────────┘
                            │
                            ▼
┌──────────────────────────────────────────────────────────┐
│ Determine whether the target object is an obstacle based │  103
│ on the first feature information and the second feature   │
│ information                                              │
└──────────────────────────────────────────────────────────┘
```

FIG. 1

## Description

### TECHNICAL FIELD

The present disclosure relates to the field of mobile robots, and in particular to an obstacle detection method, a mobile robot, and a machine-readable storage medium.

### BACKGROUND

In recent years, various types of mobile robots have developed rapidly in terms of technology and market. Mobile robots are machine devices that automatically perform tasks and rely on their own power and control capabilities to achieve various functions. Mobile robots can accept human commands, run pre-programmed programs, and act according to strategies formulated by artificial intelligence. For example, users can use a manual remote control to control a mobile robot to perform related operations, such as issuing operation commands wirelessly to the mobile robot by the manual remote control. After receiving the operation command, the mobile robot executes the operation specified by the operation command to complete the related function.

When a mobile robot moves in a target scene, the mobile robot can locate itself during the movement and build an incremental map based on its own positioning. Moreover, during the movement of a mobile robot, the mobile robot needs to detect obstacles in the target scene and perform obstacle avoiding operations based on the position of the obstacles.

In order to detect obstacles in the target scene, the mobile robot needs to be provided with image sensors to acquire RGB images of the target scene by the image sensors, and detect obstacles in the target scene based on the RGB images. However, there may be false detection when detecting obstacles through RGB images. For example, due to the influence of lighting, light and shadow may be recognized as obstacles, resulting in inaccurate detection of obstacles in the target scene.

### SUMMARY

The present disclosure provides an obstacle detection method applied to a mobile robot including a laser sensor and an image sensor. The laser sensor is used to acquire laser data of a target scene, and the image sensor is used to acquire image data of the target scene. The method includes: determining first feature information of a target object in the target scene based on the laser data; determining second feature information of a candidate object in the target scene based on the image data; and determining whether the target object is an obstacle based on the first feature information and the second feature information.

The present disclosure provides a mobile robot including: one or more laser sensors, configured to acquire laser data for a target scene; one or more image sensors, configured to acquire image data for the target scene; and one or more processors, configured to: determine first feature information of a target object in the target scene based on the laser data; determine second feature information of a candidate object in the target scene based on the image data; and determine whether the target object is an obstacle based on the first feature information and the second feature information.

The present disclosure provides a mobile robot including: one or more processors and one or more machine-readable storage media, where the one or more machine-readable storage media store machine executable instructions that can be executed by the one or more processors, and the one or more processors execute the machine executable instructions to implement the obstacle detection method according to the above example of the present disclosure.

The present disclosure provides a machine-readable storage medium on which computer instructions are stored. When the computer instructions are executed by a processor, the obstacle detection method described in the above example of the present disclosure can be implemented.

From the above technical solutions, it can be seen that in the embodiments of the present disclosure, laser data for the target scene can be acquired through a laser sensor, and image data for the target scene can be acquired through an image sensor. Based on the laser data and image data, obstacles in the target scene can be accurately detected, that is, the fusion of obstacle detection for the laser sensor and image sensor can better perform obstacle detection and obstacle avoidance, greatly improving the accuracy of obstacle detection. On the premise of reducing false detection, the possibility of collision between the mobile robot and obstacles can be greatly reduced, and the obstacle avoidance function can be better achieved. By combining the advantages of the laser sensor and the image sensor, dense and accurate obstacle depth estimation can be achieved. The use of image data can overcome the detection defects of laser data, such as difficulty in detecting low obstacles, black obstacles, etc. The use of laser data can overcome the defects of image data, such as the recognition of light and shadow as obstacles due to the influence of lighting.

**BRIEF DESCRIPTION OF DRAWINGS**

In order to provide a clearer explanation of technical solutions in the embodiments or background technology of the present disclosure, accompanying drawings used in the embodiments or background technology of the present disclosure will be explained below. The drawings described below are only some embodiments described in the present disclosure. For those skilled in the art, other drawings can further be obtained based on these drawings of the embodiments of the present disclosure.

FIG. 1 is a flowchart of an obstacle detection method in an embodiment of the present disclosure.
FIG. 2 is a schematic diagram of a positional relationship between a laser sensor and an image sensor.
FIG. 3 is a flowchart of an obstacle detection method in an embodiment of the present disclosure.
FIG. 4A is a schematic diagram of a position coordinate box of a candidate object.
FIG. 4B is a schematic diagram of position coordinate boxes of candidate objects in two RGB images.
FIG. 4C is a schematic diagram of obtaining a three-dimensional coordinate through a triangulation method.
FIG. 5 is a view of a XOY plane.
FIG. 6 is a flowchart of an obstacle detection method in an embodiment of the present disclosure.
FIG. 7 is a flowchart of an obstacle detection method in an embodiment of the present disclosure.
FIG. 8 is a structural schematic diagram of an obstacle detection apparatus in an embodiment of the present disclosure.
FIG. 9 is a hardware structure diagram of a mobile robot in an embodiment of the present disclosure.

**DETAILED DESCRIPTION**

The terms used in the embodiments of the present disclosure are only for the purpose of describing specific embodiments and are not intended to limit the present disclosure. As used in the present disclosure and claims, the singular forms "a", "said", and "the" are intended to include the plural forms as well, unless the context clearly indicates otherwise. It should also be understood that the term "and/or" as used herein refers to and includes any and all possible combinations of one or more of the associated listed items.

It shall be understood that, although the terms "first," "second," "third," and the like may be used herein to describe various information, the information should not be limited by these terms. These terms are only used to distinguish the same type of information from each other. For example, without departing from the scope of the present disclosure, first information may be referred as second information; and similarly, second information may also be referred as first information. Depending on the context, the word "if" as used herein can be interpreted as "at the time of", "when" or "in response to determining".

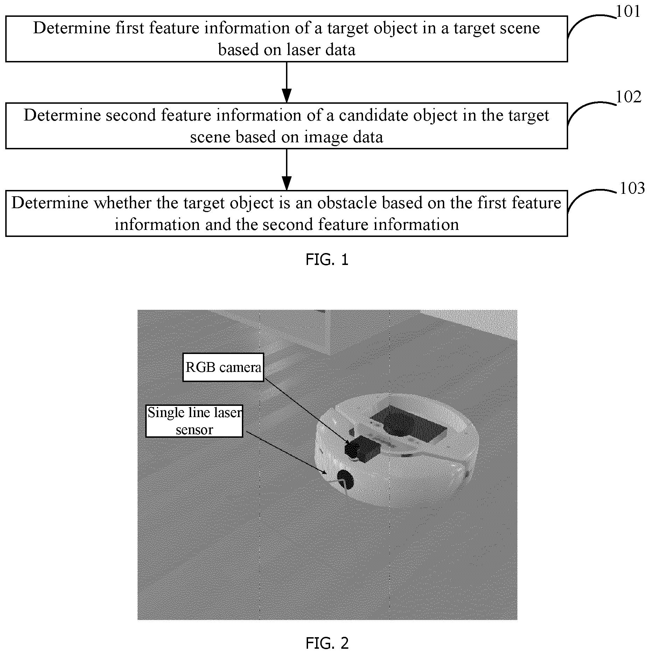

The embodiments of the present disclosure propose an obstacle detection method for detecting the presence of obstacles in a target scene. The obstacle detection method can be applied to a mobile robot including a laser sensor and an image sensor. The laser sensor is used to acquire laser data of the target scene, and the image sensor is used to acquire image data of the target scene. As shown in FIG. 1, FIG. 1 is a flowchart of the obstacle detection method. The obstacle detection method may include steps 101 to 103.

In step 101, first feature information of a target object in a target scene is determined based on laser data.

In step 102, second feature information of a candidate object in the target scene is determined based on image data.

In step 103, it is determined whether the target object is an obstacle based on the first feature information and the second feature information.

In an embodiment, the first feature information may include an initial height and a three-dimensional coordinate of the target object, and the second feature information may include a suspicious region and an object type of the candidate object. Based on this, if the initial height is greater than a first preset threshold and less than a second preset threshold, and the three-dimensional coordinate is located within the suspicious region, a target height corresponding to the object type can be determined. Furthermore, if the initial height matches the target height, it can be determined that the target object is an obstacle. Alternatively, if the initial height does not match the target height, it can be determined that the target object is not an obstacle.

In another embodiment, the first feature information may include the number of echo signals and a three-dimensional coordinate of the target object, and the second feature information may include a suspicious region and an object color of the candidate object. Based on this, if it is determined, based on the number of echo signals, that the region where the target object is located is an echo-free region and the three-dimensional coordinate is within the suspicious region, it can be determined whether the object color is black. Furthermore, if the object is black in color, it can be determined that the target object is an obstacle; or if the object is not black in color, it can be determined that the target object is not an obstacle.

In another embodiment, the first feature information may include an initial height. Based on this, after determining the first feature information of the target object in the target scene based on laser data, if the initial height is greater than or equal to a second preset threshold, it can be determined that the target object is an obstacle.

In the above embodiments, determining the first feature information of the target object in the target scene based on laser data may include but is not limited to the following methods: determining, based on the laser data, a two-dimensional coordinate and a number of echo signals of the target object; determining, based on the two-dimensional coordinate, a pose of the laser sensor, and a pose of the mobile robot, a three-dimensional coordinate of the target object; and determining, based on the three-dimensional coordinate, an initial height of the target object. On this basis, based on the number of echo signals, the three-dimensional coordinate, and the initial height, the first feature information can be determined.

In the above embodiments, determining the second feature information of the candidate object in the target scene based on the image data may include but is not limited to the following methods: inputting the image data into a trained target network model to obtain a position coordinate box of the candidate object, an object type of the candidate object, and an object color of the candidate object in the image data; selecting a candidate feature point within the position coordinate box, and selecting a target feature point corresponding to the candidate feature point from previous image data before the image data; determining, based on a pixel coordinate of the candidate feature point and a pixel coordinate of the target feature point, a three-dimensional coordinate for the candidate feature point; and determining, based on the three-dimensional coordinate, a suspicious region for the candidate object. On this basis, based on the suspicious region, the object type, and the object color, the second feature information can be determined.

Where the position coordinate box includes a plurality of candidate feature points, and a three-dimensional coordinate for each of the plurality of candidate feature points includes an abscissa, an ordinate, and an applicate, where determining, based on the three-dimensional coordinate, the suspicious region for the candidate object can include but is not limited to: selecting, from abscissas for the plurality of candidate feature points, a minimum abscissa and a maximum abscissa, selecting, from ordinates for the plurality of candidate feature points, a minimum ordinate and a maximum ordinate, and selecting, from applicates for the plurality of candidate feature points, a minimum applicate and a maximum applicate; and determining, based on the minimum abscissa, the maximum abscissa, the minimum ordinate, the maximum ordinate, the minimum applicate, and the maximum applicate, the suspicious region for the candidate object.

From the above technical solutions, it can be seen that in the embodiments of the present disclosure, laser data for the target scene can be acquired through a laser sensor, and image data for the target scene can be acquired through an image sensor. Based on the laser data and image data, obstacles in the target scene can be accurately detected, that is, the fusion of obstacle detection for the laser sensor and image sensor can better perform obstacle detection and obstacle avoidance, greatly improving the accuracy of obstacle detection. On the premise of reducing false detection, the possibility of collision between the mobile robot and obstacles can be greatly reduced, and the obstacle avoidance function can be better achieved. By combining the advantages of the laser sensor and the image sensor, dense and accurate obstacle depth estimation can be achieved. The use of image data can overcome the detection defects of laser data, such as difficulty in detecting low obstacles, black obstacles, etc. The use of laser data can overcome the defects of image data, such as the recognition of light and shadow as obstacles due to the influence of lighting.

The above technical solutions of the embodiments of the present disclosure will be explained in conjunction with specific application scenarios.

During the movement of a mobile robot, the mobile robot needs to detect obstacles in the target scene (i.e., when the mobile robot passes through the scene, such as when the mobile robot moves indoors, the indoor scene is used as the target scene), and obstacle avoidance can be performed based on the position of the obstacles. In order to detect obstacles in the target scene, the mobile robot may be provided with image sensors to acquire RGB images of the target scene by the image sensors, and detect obstacles in the target scene based on the RGB images. However, there may be false detection when detecting obstacles in through RGB images. For example, due to the influence of lighting, light and shadow may be recognized as obstacles, resulting in inaccurate detection of obstacles in the target scene, that is, the accuracy of obstacle detection is relatively poor.

For example, the mobile robot can deploy a laser sensor to acquire laser data of the target scene and detect obstacles in the target scene based on the laser data. However, since the laser sensor can only detect object height information and lack object attributes, some objects of the same height can be crossed by the mobile robot, such as doorsills, and some objects of the same height cannot be crossed by the mobile robot, such as wires. The characteristics of the laser data of the threshold and the wire are basically the same, so it is impossible to distinguish between these two types of objects based on laser data. In some scenarios, the laser sensor may have inaccurate distance measurement, leading to false detection of obstacles, such as inaccurate distance measurement on marble surfaces. In some scenarios, the laser sensor is unable to detect black obstacles.

In response to the above findings, in the embodiments of the present disclosure, the laser sensor and the image sensor can be deployed simultaneously on the mobile robot. The Laser sensor can be a radar sensor or other types of sensors, as long as they have ranging capabilities. The laser sensor can be a single line laser sensor or a multi-line laser sensor, without limitation. The embodiments take a single line laser sensor as an example. The image sensor can be an RGB camera or other types of sensors, as long as they have image acquisition capabilities. The image sensor can be a monocular sensor or a multicular sensor, without limitation. The embodiments take a monocular sensor as an example.

As shown in FIG. 2, FIG. 2 is a schematic diagram of the positional relationship between the laser sensor and the image sensor. The image sensor can be located on the upper side of the laser sensor, and alternatively, the laser sensor can be located on the upper side of the image sensor. The field of view of the laser sensor and the field of view of the image sensor can completely or partially overlap, and there is no restriction on this, as long as there is an overlapping region between the two fields of view.

In practical applications, the number of laser sensors can be one or at least two, and the number of image sensors can be one or at least two, without limitation. For ease of description, this embodiment takes one laser sensor and one image sensor as examples for explanation.

In the embodiments of the present disclosure, laser data of the target scene can be acquired through a laser sensor, and image data of the target scene can be acquired through an image sensor, and the laser data and image data can be fused to accurately detect obstacles in the target scene, thus better performing obstacle detection and obstacle avoidance.

In the embodiments of the present disclosure, an analysis process based on image data, an analysis process based on laser data, and an obstacle fusion detection process are involved. In the analysis process based on image data, it is necessary to determine the feature information (i.e., the feature information obtained based on image data) of each object in the target scene. For ease of distinction, an object in the target scene that undergoes feature analysis based on image data can be referred to as a candidate object, and the feature information of the candidate object obtained based on image data can be referred to as second feature information. In the analysis process based on laser data, it is necessary to determine the feature information (i.e., the feature information obtained based on laser data) of each object in the target scene. For ease of distinction, an object in the target scene that undergoes feature analysis based on laser data can be referred to as a target object, and the feature information of the target object obtained based on laser data can be referred to as the first feature information. In the process of obstacle fusion detection, obstacle detection can be performed based on the second feature information and the first feature information.

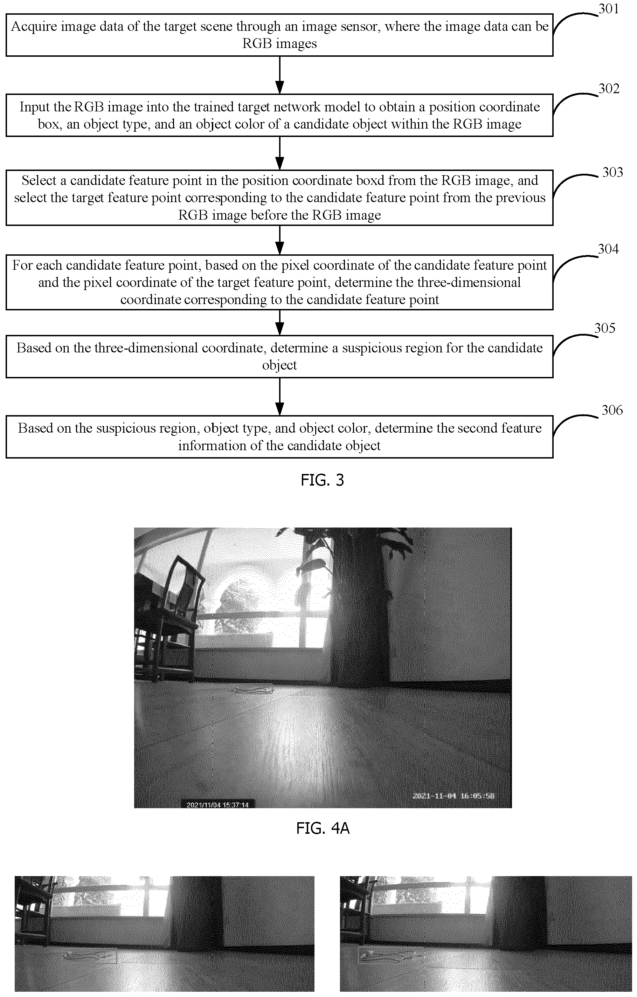

First, the analysis process based on image data, as shown in FIG. 3, can include steps 301 to 306.

In step 301, image data of the target scene is acquired through an image sensor. The image data can be RGB images or other types of images, and there are no restrictions on the type of image data.

In step 302, the RGB image is input into the trained target network model to obtain a position coordinate box, an object type, and an object color of a candidate object within the RGB image.

For example, to detect the position coordinate box, the object type, and the object color of the candidate object, a training process of a network model and a detection process of the network model are involved. In the training process of the network model, it is necessary to pre-train the target network model, and the training process is executed before step 302 and implemented on a training device (or training platform). There is no restriction on the type of training device used, as long as the target network model can be trained. After training the target network model, the target network model can be deployed to the mobile robot. In the detection process of the network model, the mobile robot can use the target network model to detect the position coordinate box, object type, and object color of the candidate object.

For the training process of the network model, an initial network model can be configured, and the structure and function of the initial network model are not limited, as long as the initial network model is used to detect the position coordinate box, object type, and object color of objects. For example, the initial network model can be a network model based on deep learning algorithms, a network model based on neural networks, or other types of network models. As an example, the initial network model can be the YOLOV3 (You Only Look Once) model, of course, the YOLOV3 model is just an example of the initial network model.

In order to train the network model, a training dataset can be obtained, where the training dataset includes a large number of sample images (such as sample images of RGB type). For each sample image, the corresponding label information includes the position bounding box, object type, and object color of the objects within the sample image.

Based on the training dataset and the initial network model, the training dataset can be used to train the initial network model, without any restrictions on the training process. The trained network model can be referred to as the target network model for easy differentiation. Since the initial network model is used to detect the position coordinate box, object type, and object color of candidate objects, the target network model is used to detect the position coordinate box, object type, and object color of candidate objects. In practical applications, if the initial network model is the YOLOV3 model, the target network model is the YOLOV3 model.

For the detection process of the network model, in step 302, after obtaining the RGB image, the RGB image can be input to the target network model. Since the target network model is used to detect the position coordinate box, object type, and object color of the candidate object within the RGB image, the target network model can output features such as the position coordinate box, object type, and object color of the candidate object within the RGB image.

For example, a position coordinate box is used to represent the position of the candidate object within an RGB image. The position coordinate box can be a rectangular coordinate box, which can be represented by the coordinate of any corner (such as the upper left corner, upper right corner, lower left corner, or lower right corner) of the rectangular coordinate box, as well as the length and height of the rectangular coordinate box. It can also be represented by the coordinates of the four corners (such as the upper left corner, upper right corner, lower left corner, and lower right corner) of the rectangular coordinate box. Of course, the above methods are only two examples, which is not limited.

For example, the object type is used to represent the type of the candidate object within an RGB image, such as a wire, a sock, a shoe, or a trash can, etc. In the embodiments, there are no restrictions on the types of the candidate object.

For example, the object color is used to represent the color of the candidate object within an RGB image. In an example, the object color is distinguished as black and non-black (i.e., all colors except black). In another example, the object color is distinguished as black, red, blue, and green, etc., i.e., including various colors.

As shown in FIG. 4A, FIG. 4A is an example of the position coordinate box of the candidate object detected by the target network model. Obviously, by the position coordinate box, the candidate object can be found from the RGB image.

In step 303, a candidate feature point in the position coordinate box is selected from the RGB image, and the target feature point corresponding to the candidate feature point is selected from the previous RGB image before the RGB image.

For example, in the process of image processing, the feature point can be a point where the grayscale value of the image undergoes drastic changes, or a point (i.e., the intersection of two edges) with large curvature on the edge of the image. After obtaining the position coordinate box in the RGB image, the candidate feature point can be selected from the position coordinate box in the RGB image, that is, the candidate feature point is located within the position coordinate box of the RGB image. For example, the Fast corner method is used to select the candidate feature point from the position coordinate box of an RGB image. The Fast corner method is only an example, and there is no limitation on the selection method of the feature point, as long as the candidate feature point can be selected from the position coordinate box of the RGB image.

When the candidate feature point is selected from the position coordinate box in the RGB image, multiple candidate feature points can be selected from the position coordinate box, and there is no limit to the number of candidate feature points.

For example, for each candidate feature point in an RGB image, a target feature point corresponding to the candidate feature point can be selected from another RGB image (such as the previous RGB image before the RGB image) before the RGB image, that is, the feature points in the two RGB images are matched to find the matching relationship between the candidate feature point and the target feature point, denoted as the matching relationship between $P_i$ and $S_j$, representing the matching between the i-th feature point in the RGB image P and the j-th feature point in the RGB image S.

When feature points in two RGB images are matched, the similarity between the descriptors of the feature points can be calculated, and based on the similarity between the descriptors of the feature points, whether the two feature points have a matching relationship can be determined. For example, when the similarity between the descriptors of two feature points is greater than a preset threshold, it is determined that there is a matching relationship between these two feature points. Otherwise, it is determined that there is no matching relationship between these two feature points. In this case, the similarity between the descriptor of the candidate feature point and the descriptor of the target feature point is greater than the preset threshold. For example, the similarity between the descriptor of a candidate feature point and each feature point in another RGB image is calculated, and the feature point corresponding to the maximum similarity can be taken as the target feature point for the candidate feature point.

In the above process, the descriptor can be Brief descriptor, or SIFT descriptor, etc, which is not limited, and the descriptor is a method used to extract the feature from image data.

In the above process, in order to quickly match feature points in two RGB images, it is also possible to find the position coordinate box of the candidate object in another RGB image based on the pose relationship between the two RGB images and the position coordinate box of the candidate object in one RGB image. Then, the feature points in the two position coordinate boxes are matched to quickly complete the feature point matching. The pose relationship between two RGB images can be determined by the positioning system of the mobile robot, where the positioning system can be a laser SLAM, a visual SLAM, or an inertial navigation unit. There are no restrictions on the type of positioning system used.

As shown in FIG. 4B, the pose relationship between two RGB images before and after a pose transformation is represented. FIG. 4B shows an example of the position coordinate boxes of candidate objects in the two RGB images.

In step 304, for each candidate feature point, based on the pixel coordinate of the candidate feature point and the pixel coordinate of the target feature point, the three-dimensional coordinate (i.e., the three-dimensional physical coordinate) corresponding to the candidate feature point is determined.

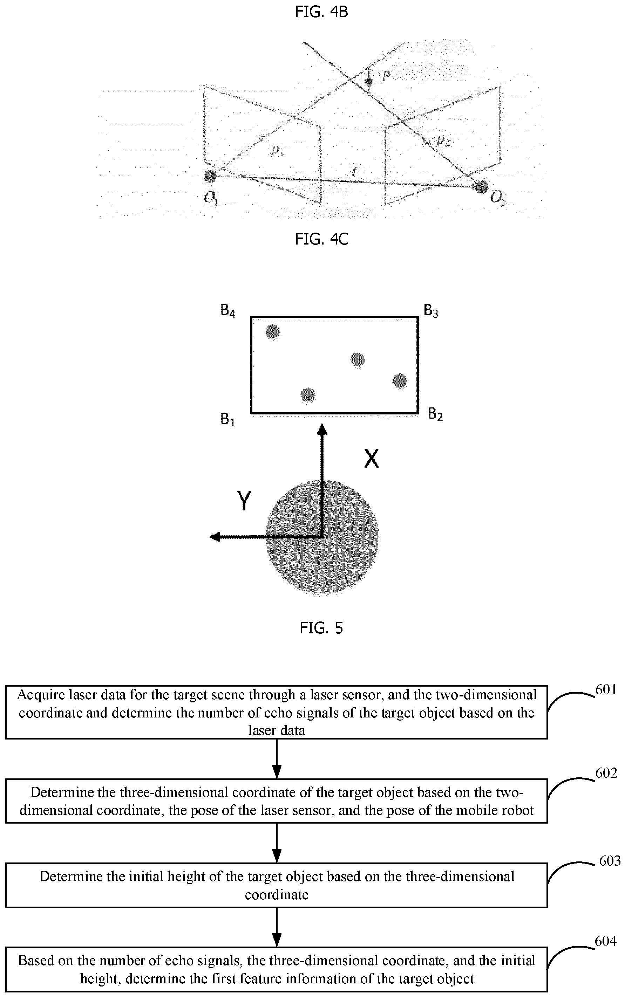

For example, based on the feature point matching result, the candidate feature point and the target feature point corresponding to the candidate feature point can be found. By combining the pixel coordinate (pixel position) of the candidate feature point with the pixel coordinate of the target feature point, the three-dimensional coordinate corresponding to the candidate feature point can be obtained. For example, the triangulation method can be used to obtain the three-dimensional coordinate corresponding to the candidate feature point. As shown in FIG. 4C, FIG. 4C shows an example of obtaining the three-dimensional coordinate using the triangulation method, where $p_1$ represents the pixel coordinate of the target feature point, $p_2$ represents the pixel coordinate of the candidate feature point, $O_1$ represents the position of an image sensor for the previous RGB image, $O_2$ represents the position of an image sensor for the current RGB image, $t$ represents the time interval between the previous RGB image and the current RGB image, and $P$ represents the three-dimensional coordinate.

Based on the pixel coordinate of the candidate feature point and the pixel coordinate of the target feature point, through the triangulation method, the three-dimensional coordinate is obtained, which is not limited in the embodiments, as long as the three-dimensional coordinate can be obtained. The following will explain the process of determining the three-dimensional coordinate with a specific example.

According to the principle of camera imaging,

$$K*x*1/Z=p,$$

and

$$x=[X\ Y\ Z],$$

Where $P$ represents the pixel coordinate, that is, $p_1$ represents the pixel coordinate of the target feature point, $p_2$ represents the pixel coordinate of the candidate feature point, $x$ represents the three-dimensional coordinate of the candidate feature point in the world coordinate system, that is, the three-dimensional coordinate of point $P$ in FIG. 4C, and $K$ represents the camera internal parameter.

For the candidate feature point and the target feature point that are successfully matched, the three-dimensional coordinate of the candidate feature point in the world coordinate system should be the same as the three-dimensional coordinate of the target feature point in the world coordinate system. Based on this relationship, the following formulas (1) and (2) can be satisfied:

$$R_1^w x_1 + t_1^t = R_2^w x_2 + t_2^t \qquad \text{Formula (1)};$$

$$R_1^w Z_1 K^{-1} p_1 + t_1^t = R_2^w Z_2 K^{-1} p_2 + t_2^t \qquad \text{Formula (2)}.$$

In formulas (1) and (2), $R_1^w$ represents the rotation matrix for the image sensor for the previous RGB image, $t_1^t$ represents the translation matrix for the image sensor for the previous RGB image, $R_2^w$ represents the rotation matrix for the image sensor for the current RGB image, and $t_2^t$ represents the translation matrix for the image sensor for the current RGB image, and $R_1^w$ and $t_1^t$ is the pose for the previous RGB image, $R_2^w$ and $t_2^t$ is the pose for the current RGB image. Obviously, $R_1^w$, $t_1^t$, $R_2^w$, and $t_2^t$ are all known quantities. In addition, $K$ represents the camera intrinsic parameter, $p_1$ represents the pixel coordinate of the target feature point, $p_2$ represents the pixel coordinate of the candidate feature point, and these parameters are also known quantities. From formulas (1) and (2), it can be seen that the variables to be calculated are $Z_1$ and $Z_2$, and the rest are known quantities.

Assuming $x' = K^{-1}p$, based on formulas (1) and (2), the equation can be changed to formula (3):

$$Z_1 x_1' = R_w^1 \left( R_2^w Z_2 x_2' + t_2^t - t_1^t \right) \qquad \text{Formula (3)}.$$

By utilizing the particularity of cross product, where $\times$ represents cross product, the equation can be changed to formula (4):

$$Z_1 x_1' \times x_1' = 0 = x_1' \times R_w^1 \left( R_2^w Z_2 x_2' + t_2^t - t_1^t \right) \qquad \text{Formula (4)}.$$

$Z_2$ can be obtained from formula (4), and $Z_1$ can be obtained by substituting $Z_2$ into formula (3).

By substituting $Z_1$ into $K*x*1/Z-p$, $X_1$ and $Y_1$ can be obtained, and then $x_1=[X_1\ Y_1\ Z_1]$ can be obtained, where $x_1$ represents the three-dimensional coordinate for the target feature point.

Similarly, by substituting $Z_2$ into $K*x*1/Z=p$, $X_2$ and $Y_2$ can be obtained, and then $x_2=[X_2\ Y_2\ Z_2]$ can be obtained, where $x_2$ represents the three-dimensional coordinate for the candidate feature points.

In summary, all candidate feature points can obtain their corresponding three-dimensional coordinates in the world coordinate system.

In step 305, based on the three-dimensional coordinate, a suspicious region for the candidate object is determined.

For example, the position coordinate box in an RGB image can include multiple candidate feature points, each corresponding to a three-dimensional coordinate, and the three-dimensional coordinate can include an abscissa, an ordinate, and an applicate. On this basis, a minimum abscissa and a maximum abscissa can be selected from abscissas for the plurality of candidate feature points, a minimum ordinate and a maximum ordinate can be selected from ordinates for the plurality of candidate feature points, and a minimum applicate and a maximum applicate can be selected from applicates for the plurality of candidate feature points. Based on the minimum abscissa, the maximum abscissa, the minimum ordinate, the maximum ordinate, the minimum applicate, and the maximum applicate, the suspicious region for the candidate object can be determined.

As shown in FIG. 5, FIG. 5 is a view of the XOY plane, and the mobile robot and the candidate feature points are shown, with the arrow indicating orientation and the black box indicating the suspicious region corresponding to the candidate object. Since the candidate feature points extracted from the RGB image are sparse, the suspicious region corresponding to the candidate object should be slightly larger than the distribution of candidate feature points.

Where the minimum abscissa is denoted as $x_{min}$, the maximum abscissa is denoted as $x_{max}$, the minimum ordinate is denoted as $y_{min}$, and the maximum ordinate is denoted as $y_{max}$, then the four vertices of the suspicious region for the candidate object are $B_1$, $B_2$, $B_3$ and $B_4$. Therefore, the coordinates of $B_1$, $B_2$, $B_3$ and $B_4$ can be as follows:

$$B_1 = \begin{bmatrix} x_{min} - \Delta x \\ y_{max} + \Delta y \end{bmatrix}, \quad B_2 = \begin{bmatrix} x_{min} - \Delta x \\ y_{min} - \Delta y \end{bmatrix}, \quad B_3 = \begin{bmatrix} x_{max} + \Delta x \\ y_{min} - \Delta y \end{bmatrix} \text{ and } B_4 = \begin{bmatrix} x_{max} + \Delta x \\ y_{max} + \Delta y \end{bmatrix}.$$

In addition, the minimum applicate is denoted as $z_{min}$ and the maximum applicate is denoted as $z_{max}$, then on the Z-axis, there are also upper and lower limits of the obstacle height, namely $H_{max} = z_{max} + \Delta z$ and $H_{min} = z_{min} - \Delta z$.

For example, $\Delta x$, $\Delta y$ and $\Delta z$ are all empirical quantities that depend on the type of an object being recognized, which is not limited. For example, for wires, $\Delta x$ takes 0.05-0.1m, $\Delta y$ takes 0.02-0.05m, $\Delta z$ takes 0.02-0.05m.

In step 306, based on the suspicious region, object type, and object color, the second feature information of the candidate object is determined, that is, the second feature information includes the suspicious region, object type, and object color.

For example, the suspicious region can be projected onto a map by marking the suspicious region on the map, indicating the suspicious location of the obstacle, and the object type and object color can be marked for the suspicious region.

In summary, the analysis process based on image data is completed to obtain the second feature information of the candidate object.

Second, the analysis process based on laser data, as shown in FIG. 6, can include steps 601 to 604.

In step 601, laser data for the target scene is acquired through a laser sensor, and the two-dimensional coordinate and the number of echo signals of the target object are determined based on the laser data.

For example, a laser sensor can emit a line laser and receive the echo signal of the line laser. The laser sensor acquires laser data of the target scene based on the echo signal. The laser data can include but is not limited to the two-dimensional coordinate and the number of echo signals of the target object in the target scene. The number of echo signals represents the number of echo signals received by the laser sensor. In this way, the two-dimensional coordinate and the number of echo signals of the target object can be determined based on the laser data.

In step 602, the three-dimensional coordinate of the target object (i.e., the corresponding three-dimensional physical coordinate of the target object in the world coordinate system) is determined based on the two-dimensional coordinate, the pose of the laser sensor, and the pose of the mobile robot.

For example, for a line laser, the laser sensor detects points on a single plane with coordinates of only (x, y). However, by designing the placement position, the three-dimensional coordinate of the target object can be obtained based on the extrinsic parameter of the laser sensor, the pose of the mobile robot, and the pose of the laser sensor, as shown in formula (5):

$$X = T_c^w T_l \begin{bmatrix} x_l \\ y_l \\ 0 \\ 1 \end{bmatrix} = \begin{bmatrix} x_w \\ y_w \\ z_w \\ 1 \end{bmatrix}$$ Formula (5).

In formula (5), $T_c^w$ represents the pose of the mobile robot, $T_l$ represents the pose of the laser sensor, $(x_l, y_l)$ represents the two-dimensional coordinate of the target object, and $(x_w, y_w, z_w)$ represents the three-dimensional coordinate of the target object.

In step 603, the initial height of the target object is determined based on the three-dimensional coordinate.

For example, for the three-dimensional coordinate $(x_w, y_w, z_w)$ of the target object, $z_w$ represents the height of the target object. For ease of distinction, the height of the target object is referred to as an initial height of the target object.

In step 604, based on the number of echo signals, the three-dimensional coordinate, and the initial height, the first feature information of the target object is determined, that is, the first feature information includes the number of echo signals, the three-dimensional coordinate, and the initial height.

In summary, the analysis process based on laser data is completed to obtain the first feature information of the target object.

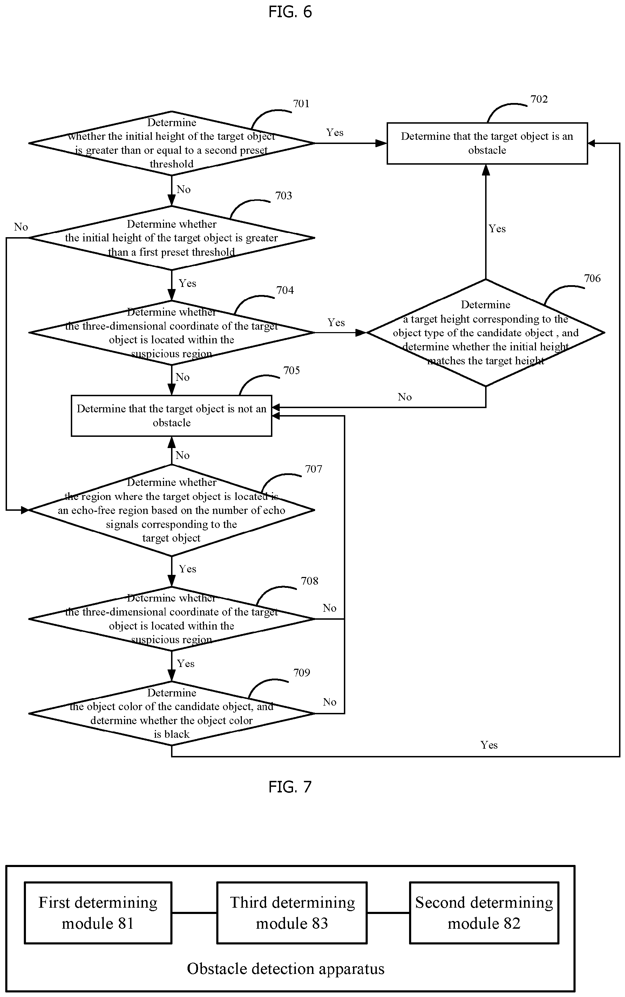

Third, the process of obstacle fusion detection. For a target object with an initial height $z_w$ equal to 0, it indicates that the target object is the ground and not an obstacle, while for a target object with an initial height $z_w$ greater than 0, it indicates that the target object is an obstacle on the ground. However, due to the inaccurate estimation of the pose $T_c^w$ of the mobile robot and the fact that the line laser only has two-dimensional information, there may be bumps and vibrations during the movement of the mobile robot, which can affect the three-dimensional coordinate of the obstacle detected. In addition, due to the characteristics of sensor data, the line laser also suffers from inaccurate distance measurement on marble floors, which can lead to errors in the calculation of three-dimensional coordinate of the obstacle. In order to avoid false alarms for low obstacles, in this embodiment, laser data and image data need to be combined. The obstacle fusion detection process can be seen in FIG. 7, and the process can include steps 701 to 709.

In step 701, it is determined whether the initial height of the target object is greater than or equal to a second preset threshold. If so, step 702 can be executed; and if not, step 703 can be executed.

For example, the first feature information of the target object may include the initial height of the target object, and it can be determined whether the initial height is greater than or equal to a second preset threshold. The second preset threshold can be configured based on experience. If the initial height is greater than or equal to the second preset threshold, it indicates that the target object is a high obstacle. If the initial height is less than the second preset threshold, it indicates that the target object is not a high obstacle.

In step 702, if the initial height is greater than or equal to the second preset threshold, it is determined that the target object is an obstacle.

In an embodiment, after determining that the target object is an obstacle, obstacle avoidance can further be performed on the obstacle (i.e., the target object), and there are no restrictions on the way the obstacle avoidance operation is performed in this embodiment.

In step 703: it is determined whether the initial height of the target object is greater than a first preset threshold. If so, step 704 can be executed; and if not, step 707 can be executed.

For example, it can be determined whether the initial height is greater than a first preset threshold. The first preset threshold can be configured based on experience. If the initial height is greater than the first preset threshold, that is, greater than the first preset threshold and less than the second preset threshold, it indicates that the target object is a low obstacle. If the initial height is less than or equal to the first preset threshold, it indicates that the target object is not a low obstacle and may be the ground.

In the above embodiments, the first preset threshold may be smaller than the second preset threshold.

In step 704, if the initial height is greater than the first preset threshold and less than the second preset threshold, it is determined whether the three-dimensional coordinate of the target object is located within the suspicious region, that is, the suspicious region for the candidate object. If not, step 705 can be executed; If so, step 706 can be executed.

For example, the first feature information of the target object includes the three-dimensional coordinate of the target object, and the second feature information of the candidate object include the suspicious region of the candidate object. Therefore, it can be determined whether the three-dimensional coordinate is located within the suspicious region. For example, if the suspicious region is a two-dimensional suspicious region, when the abscissa $x_w$ of the three-dimensional coordinate is between the minimum abscissa and maximum abscissa of the suspicious region, and the ordinate $y_w$ of the three-dimensional coordinate is between the minimum ordinate and maximum ordinate of the suspicious region, it is determined that the three-dimensional coordinate is located within the suspicious region. Otherwise, it is determined that the three-dimensional coordinate is not located within the suspicious region. If the suspicious region is a three-dimensional suspicious region, when the abscissa $x_w$ of the three-dimensional coordinate is between the minimum abscissa and maximum abscissa of the suspicious region, and the ordinate $y_w$ of the three-dimensional coordinate is between the minimum ordinate and maximum ordinate of the suspicious region, and the applicate $z_w$ of the three-dimensional coordinate is between the minimum applicate and maximum applicate of the suspicious region, it is determined that the three-dimensional coordinate is located within the suspicious region. Otherwise, it is determined that the three-dimensional coordinate is not located within the suspicious region.

In step 705, it is determined that the target object is not an obstacle, that is, it is detected as not an obstacle.

In step 706, a target height corresponding to the object type of the candidate object is determined, and it is determined whether the initial height matches the target height. If so, step 702 can be executed; and if not, step 705 can be executed.

For example, for each obstacle type of obstacle, the mapping relationship between the object type of the obstacle and the target height of the obstacle (i.e., the actual height of the obstacle) can be pre-configured. Based on this, for step 706, if the three-dimensional coordinate of the target object is located within the suspicious region of the candidate object, since the second feature information of the candidate object can also include the object type of the candidate object, the mapping relationship can be queried through the object type to obtain the target height corresponding to the object type.

Then, if the initial height matches the target height, for example, the absolute value of the difference between the initial height and the target height is less than the preset height threshold, it can be determined that the target object is an obstacle. If the initial height does not match the target height, for example, the absolute value of the difference between the initial height and the target height is greater than or equal to the preset height threshold, it can be determined that the target object is not an obstacle.

In step 707, if the initial height is less than or equal to the first preset threshold, it is determined whether the region where the target object is located is an echo-free region based on the number of echo signals corresponding to the target object. If not, step 705 can be executed; If so, step 708 can be executed.

For example, for black objects, the characteristic of the laser sensor is the presence of echo-free phenomenon during detection, which means that the laser emitted by the laser sensor is absorbed by the black object, resulting in the laser sensor being unable to receive the echo signal, that is, there is an echo-free region. Therefore, when the laser sensor detects that the region where the target object is located is an echo-free region, it can be further analyzed in conjunction with the suspicious region of the image sensor.

For example, the first feature information of the target object may include the number of echo signals of the target object, and based on the number of echo signals, it can be determined whether the region where the target object is located is an echo-free region. For example, if the number of echo signals is greater than a first threshold, it can be determined that the region where the target object is located is not an echo-free region. If the number of echo signals is less than or equal to the first threshold, it can be determined that the region where the target object is located is an echo-free region. For example, if the ratio of the number of echo signals to the number of laser emissions is greater than a second threshold, it can be determined that the region where the target object is located is not an echo-free region. If the ratio of the number of echo signals to the number of laser emissions is less than or equal to the second threshold, it can be determined that the region where the target object is located is an echo-free region.

For example, if the region where the target object is located is not an echo-free region, and the initial height is less than or equal to a first preset threshold, it can be directly determined that the target object is not an obstacle, which is not repeated.

For example, if the region where the target object is located is an echo-free region, and the initial height is less than or equal to the first preset threshold, the target object may or may not be an obstacle, and step 708 is executed.

In step 708, it is determined whether the three-dimensional coordinate of the target object is located within the suspicious region.

For example, the first feature information of the target object includes the three-dimensional coordinate of the target object, and the second feature information of the candidate object include the suspicious region of the candidate object. Therefore, it can be determined whether the three-dimensional coordinate is located within the suspicious region. If not, step 705 can be executed; If so, step 709 can be executed.

In step 709, the object color of the candidate object is determined, and it is determined whether the object color is black. If so, step 702 can be executed; and if not, step 705 can be executed.

For example, if the object color of the candidate object is black and no echo is detected by the line laser (i.e., the region where the target object is located is an echo-free region), it indicates that the target object is a black obstacle, that is, it is determined that the target object is an obstacle. If the object color of the candidate object is not black, even if the region where the target object is located is an echo-free region, it indicates that the target object is not a black obstacle, that is, it is determined that the target object is not an obstacle.

For example, since the second feature information of the candidate object may also include the object color of the candidate object, it is possible to determine the object color of the candidate object, whether it is black or not.

From the above technical solutions, it can be seen that in the embodiments of the present disclosure, the fusion of obstacle detection for the laser sensor and image sensor can better perform obstacle detection and obstacle avoidance, greatly improving the accuracy of obstacle detection. On the premise of reducing false detection, the possibility of collision between the mobile robot and obstacles can be greatly reduced, and the obstacle avoidance function can be better achieved. By combining the advantages of the laser sensor and the image sensor, dense and accurate obstacle depth estimation can be achieved. The use of image data can overcome the detection defects of laser data, such as difficulty in detecting low obstacles, black obstacles, etc. The use of laser data can overcome the defects of image data, such as the recognition of light and shadow as obstacles due to the influence of lighting, which achieves the recognition and avoidance of various three-dimensional complex obstacles. By fusing laser data with image data of the image sensor, dense obstacle position estimation has been achieved. By fusing image data with laser data from laser sensors, the problem of poor detection performance of low and black obstacles by line lasers has been addressed.

Based on the same concept as the above method, the embodiments of the present disclosure propose an obstacle detection apparatus applied to a mobile robot including a laser sensor and an image sensor. The laser sensor is used to acquire laser data of a target scene, and the image sensor is used to acquire image data of the target scene. As shown in FIG. 8, FIG. 8 is a structural schematic diagram of the obstacle detection apparatus. The obstacle detection apparatus includes: a first determining module 81, configured to determine first feature information of a target object in the target scene based on the laser data; a second determining module 82, configured to determine second feature information of a candidate object in the target scene based on the image data; and a third determining module 83, configured to determine whether the target object is an obstacle based on the first feature information and the second feature information.

For example, the first feature information includes an initial height and a three-dimensional coordinate, the second feature information includes a suspicious region and an object type, and when determining whether the target object is an obstacle based on the first feature information and the second feature information, the third determining module 83 is configured to: in response to determining that the initial height is greater than a first preset threshold and less than a second preset threshold, and the three-dimensional coordinate is within the suspicious region, determine a target height corresponding to the object type; and in response to determining that the initial height matches the target height, determine that the target object is an obstacle; or in response to determining that the initial height does not match the target height, determine that the target object is not an obstacle.

For example, the first feature information includes a number of echo signals and a three-dimensional coordinate, the second feature information includes a suspicious region and an object color, and when determining whether the target object is an obstacle based on the first feature information and the second feature information, the third determining module 83 is configured to: in response to determining, based on the number of echo signals, that a region where the target object is located is an echo-free region and the three-dimensional coordinate is within the suspicious region, determine whether a color of the target object is black; and in response to determining that the color of the target object is black, determine that the target object is an obstacle; or in response to determining that the color of the target object is not black, determine that the target object is not an obstacle.

For example, the first feature information includes an initial height, and the third determining module 83 is further configured to: in response to determining that the initial height is greater than or equal to a second preset threshold, determine that the target object is an obstacle.

For example, when determining the first feature information of the target object in the target scene based on the laser data, the first determining module 81 is further configured to: determine, based on the laser data, a two-dimensional coordinate and a number of echo signals of the target object; determine, based on the two-dimensional coordinate, a pose of the laser sensor, and a pose of the mobile robot, a three-dimensional coordinate of the target object; determine, based on the three-dimensional coordinate, an initial height of the target object; and determine, based on the number of echo signals, the three-dimensional coordinate, and the initial height, the first feature information.

For example, when determining the second feature information of the candidate object in the target scene based on the image data, the second determining module 82 is further configured to: input the image data into a trained target network model to obtain a position coordinate box of the candidate object, an object type of the candidate object, and an object color of the candidate object in the image data; select a candidate feature point within the position coordinate box, and select a target feature point corresponding to the candidate feature point from previous image data before the image data; determine, based on a pixel coordinate of the candidate feature point and a pixel coordinate of the target feature point, a three-dimensional coordinate for the candidate feature point; determine, based on the three-dimensional coordinate, a suspicious region for the candidate object; and determine, based on the suspicious region, the object type, and the object color, the second feature information.

For example, the position coordinate box includes a plurality of candidate feature points, and a three-dimensional coordinate for each of the plurality of candidate feature points includes an abscissa, an ordinate, and an applicate, where when determining, based on the three-dimensional coordinate, the suspicious region for the candidate object, the second determining module 82 is further configured to: select, from abscissas for the plurality of candidate feature points, a minimum abscissa and a maximum abscissa, select, from ordinates for the plurality of candidate feature points, a minimum ordinate and a maximum ordinate, and select, from applicates for the plurality of candidate feature points, a minimum applicate and a maximum applicate; and determine, based on the minimum abscissa, the maximum abscissa, the minimum ordinate, the maximum ordinate, the minimum applicate, and the maximum applicate, the suspicious region for the candidate object.

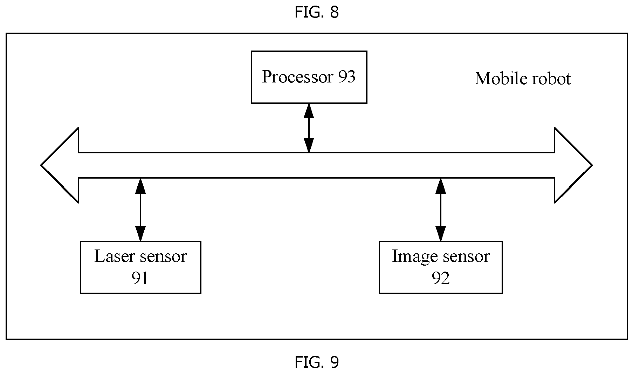

Based on the same concept as the above method, The embodiments of the present disclosure propose a mobile robot, as shown in FIG. 9, FIG. 9 is a structural schematic diagram of the mobile robot. The mobile robot may include:

one or more laser sensors 91, configured to acquire laser data for a target scene;
one or more image sensors 92, configured to acquire image data for the target scene; or
one or more processors 93, configured to: determine first feature information of a target object in the target scene based on the laser data; determine second feature information of a candidate object in the target scene based on the image data; and determine whether the target object is an obstacle based on the first feature information and the second feature information.

For example, the first feature information includes an initial height and a three-dimensional coordinate, the second feature information includes a suspicious region and an object type, and when determining whether the target object is an obstacle based on the first feature information and the second feature information, the one or more processors 93 are configured to: in response to determining that the initial height is greater than a first preset threshold and less than a second preset threshold, and the three-dimensional coordinate is within the suspicious region, determine a target height corresponding to the object type; and in response to determining that the initial height matches the target height, determine that the target object is an obstacle; or in response to determining that the initial height does not match the target height, determine that the target object is not an obstacle.

For example, the first feature information includes a number of echo signals and a three-dimensional coordinate, the second feature information includes a suspicious region and an object color, and when determining whether the target object is an obstacle based on the first feature information and the second feature information, the one or more processors 93 are configured to: in response to determining, based on the number of echo signals, that a region where the target object is located is an echo-free region and the three-dimensional coordinate is within the suspicious region, determine whether a color of the target object is black; and in response to determining that the color of the target object is black, determine that the target object is an obstacle; or in response to determining that the color of the target object is not black, determine that the target object is not an obstacle.

For example, the first feature information includes an initial height, and the one or more processors 93 are further configured to: in response to determining that the initial height is greater than or equal to a second preset threshold, determine that the target object is an obstacle.

For example, when determining the first feature information of the target object in the target scene based on the laser data, the one or more processors 93 are configured to: determine, based on the laser data, a two-dimensional coordinate and a number of echo signals of the target object; determine, based on the two-dimensional coordinate, a pose of the laser sensor, and a pose of the mobile robot, a three-dimensional coordinate of the target object; determine, based on the three-dimensional coordinate, an initial height of the target object; determine, based on the number of echo signals, the three-dimensional coordinate, and the initial height, the first feature information of the target object.

For example, when determining the second feature information of the candidate object in the target scene based on the image data, the one or more processors 93 are configured to: input the image data into a trained target network model to obtain a position coordinate box of the candidate object, an object type of the candidate object, and an object color of the candidate object in the image data; select a candidate feature point within the position coordinate box, and select a target feature point corresponding to the candidate feature point from previous image data before the image data; determine, based on a pixel coordinate of the candidate feature point and a pixel coordinate of the target feature point, a three-dimensional coordinate for the candidate feature point; determine, based on the three-dimensional coordinate, a suspicious region for the candidate object; and determine, based on the suspicious region, the object type, and the object color, the second feature information.

For example, the position coordinate box includes a plurality of candidate feature points, and a three-dimensional coordinate for each of the plurality of candidate feature points includes an abscissa, an ordinate, and an applicate, where when determining, based on the three-dimensional coordinate, the suspicious region for the candidate object, the one or more processors 93 are configured to: select, from abscissas for the plurality of candidate feature points, a minimum abscissa and a maximum abscissa, select, from ordinates for the plurality of candidate feature points, a minimum ordinate and a maximum ordinate, and select, from applicates for the plurality of candidate feature points, a minimum applicate and a maximum applicate; and determine, based on the minimum abscissa, the maximum abscissa, the minimum ordinate, the maximum ordinate, the minimum applicate, and the maximum applicate, the suspicious region for the candidate object.

Based on the same concept as the above method, this embodiment proposes a mobile robot, the mobile robot may further include one or more processors and one or more machine-readable storage media. The one or more machine-readable storage media store machine executable instructions that can be executed by the one or more processors; where the one or more processors are configured to execute machine executable instructions to implement the obstacle detection method disclosed in the above examples of the present disclosure.

According to the same concept as the above method, the embodiments of the present disclosure further provide a machine readable storage medium, on which a number of computer instructions are stored. When the computer instructions are executed by the processor, the obstacle detection method according to any one of the above embodiments of the present disclosure can be implemented.

For example, the machine-readable storage medium can be any electronic, magnetic, optical, or other physical storage device that can contain or store information such as executable instructions, data, and so on. For example, the machine-readable storage medium may be a Random Access Memory (RAM), a volatile memory, a non-volatile memory, a flash memory, a storage drive (e.g. hard disk drive), a solid state harddisk, any type of storage disk (e.g., compact disk, Digital Video Disk (DVD)), or a similar storage medium, or a combination thereof.

The systems, apparatuses, modules, or units elucidated in the above embodiments can be implemented specifically by a computer chip or entity, or by a product with certain functions. A typical implementation device is a computer, which can take the form of a personal computer, laptop, cellular phone, camera phone, smart phone, personal digital assistant, media player, navigation device, email sending and receiving device, game console, tablet computer, wearable device, or any combination of these devices.

For the convenience of description, the above devices are divided into various units according to their functions and described respectively. It is, of course, possible to implement the functions of each unit in the same or multiple software and/or hardware when implementing the present disclosure.

Those skilled in the art should understand that embodiments of the present disclosure can be provided as methods, systems, or computer program products. Accordingly, the present disclosure may take the form of an entirely hardware embodiment, an entirely software embodiment, or an embodiment combining software and hardware aspects. Furthermore, the embodiments of the present disclosure may employ the form of a computer program product implemented on one or more computer-usable storage media (including, but not limited to, disk storage, CD-ROM, optical storage, etc.), where the one or more computer-usable storage media having computer-usable program code.

The present disclosure is described with reference to the flowchart and/or block diagram of the method, device (system), and computer program product according to the embodiments of the present disclosure. It is to be understood that each process and/or block in the flowchart and/or block diagram, and the combination of processes and/or blocks in the flowchart and/or block diagram, may be implemented by computer program instructions. These computer program instructions may be provided to a processor of a general-purpose computer, a specialized computer, an embedded processor, or other programmable data processing device to produce a machine such that instructions executed by the processor of the computer or other programmable data processing device produce a apparatus for implementing a function specified in one or more processes of the flowchart and/or one or more blocks of the block diagram.

These computer program instructions may also be stored in a computer-readable memory capable of directing the computer or other programmable data processing device to operate in a particular manner such that the instructions stored in the computer-readable memory produce an article of manufacture including an instruction apparatus that implements the function specified in one or more processes of the flowchart and/or one or more blocks of the block diagram.

These computer program instructions may be provided to a processor of a general-purpose computer, a specialized computer, an embedded processor, or other programmable device to produce a machine such that instructions executed by the processor of the computer or other programmable device produce a apparatus for implementing a function specified in one or more processes of the flowchart and/or one or more blocks of the block diagram.

The above description is only embodiments of the present disclosure and is not intended to limit the present disclosure. For those skilled in the art, various modifications and changes may be made in the present disclosure. Any modification, equivalent replacement, improvement, etc. present the spirit and principle of the present disclosure shall be included in the scope of the claims of the present disclosure.

**Claims**

1.  An obstacle detection method, applied to a mobile robot comprising a laser sensor and an image sensor, wherein the laser sensor is configured to acquire laser data for a target scene, and the image sensor is configured to acquire image data for the target scene, wherein the method comprises:

determining first feature information of a target object in the target scene based on the laser data;

determining second feature information of a candidate object in the target scene based on the image data; and

determining whether the target object is an obstacle based on the first feature information and the second feature information.

2. The method according to claim 1, wherein the first feature information comprises an initial height and a three-dimensional coordinate, the second feature information comprises a suspicious region and an object type, and determining whether the target object is an obstacle based on the first feature information and the second feature information comprises:

in response to determining that the initial height is greater than a first preset threshold and less than a second preset threshold, and the three-dimensional coordinate is within the suspicious region, determining a target height corresponding to the object type; and

in response to determining that the initial height matches the target height, determining that the target object is an obstacle; or

in response to determining that the initial height does not match the target height, determining that the target object is not an obstacle.

3. The method according to claim 1, wherein the first feature information comprises a number of echo signals and a three-dimensional coordinate, the second feature information comprises a suspicious region and an object color, and determining whether the target object is an obstacle based on the first feature information and the second feature information comprises:

in response to determining, based on the number of echo signals, that a region where the target object is located is an echo-free region and the three-dimensional coordinate is within the suspicious region, determining whether a color of the target object is black; and

in response to determining that the color of the target object is black, determining that the target object is an obstacle; or

in response to determining that the color of the target object is not black, determining that the target object is not an obstacle.

4. The method according to claim 1, wherein the first feature information comprises an initial height, and after determining the first feature information of the target object in the target scene based on the laser data, the method further comprises:

in response to determining that the initial height is greater than or equal to a second preset threshold, determining that the target object is an obstacle.

5. The method according to any one of claims 1 to 4, wherein determining the first feature information of the target object in the target scene based on the laser data comprises:

determining, based on the laser data, a two-dimensional coordinate and a number of echo signals of the target object;

determining, based on the two-dimensional coordinate, a pose of the laser sensor, and a pose of the mobile robot, a three-dimensional coordinate of the target object;

determining, based on the three-dimensional coordinate, an initial height of the target object; and

determining, based on the number of echo signals, the three-dimensional coordinate, and the initial height, the first feature information.

6. The method according to any one of claims 1 to 4, wherein determining the second feature information of the candidate object in the target scene based on the image data comprises:

inputting the image data into a trained target network model to obtain a position coordinate box of the candidate object, an object type of the candidate object, and an object color of the candidate object in the image data;

selecting a candidate feature point within the position coordinate box, and selecting a target feature point corresponding to the candidate feature point from previous image data before the image data;

determining, based on a pixel coordinate of the candidate feature point and a pixel coordinate of the target feature point, a three-dimensional coordinate for the candidate feature point;

determining, based on the three-dimensional coordinate, a suspicious region for the candidate object; and

determining, based on the suspicious region, the object type, and the object color, the second feature information.

7. The method according to claim 6, wherein the position coordinate box comprises a plurality of candidate feature points, and a three-dimensional coordinate for each of the plurality of candidate feature points comprises an abscissa, an ordinate, and an applicate, wherein determining, based on the three-dimensional coordinate, the suspicious region for the candidate object comprises:

selecting, from abscissas for the plurality of candidate feature points, a minimum abscissa and a maximum abscissa, selecting, from ordinates for the plurality of candidate feature points, a minimum ordinate and a maximum ordinate, and selecting, from applicates for the plurality of candidate feature points, a minimum applicate and a maximum applicate; and

determining, based on the minimum abscissa, the maximum abscissa, the minimum ordinate, the maximum ordinate, the minimum applicate, and the maximum applicate, the suspicious region for the candidate object.

8. A mobile robot, comprising:

one or more laser sensors, configured to acquire laser data for a target scene;
one or more image sensors, configured to acquire image data for the target scene; and
one or more processors, configured to:

determine first feature information of a target object in the target scene based on the laser data;
determine second feature information of a candidate object in the target scene based on the image data; and
determine whether the target object is an obstacle based on the first feature information and the second feature information.

9. The mobile robot according to claim 8, wherein the first feature information comprises an initial height and a three-dimensional coordinate, the second feature information comprises a suspicious region and an object type, and when determining whether the target object is an obstacle based on the first feature information and the second feature information, the one or more processors are configured to:

in response to determining that the initial height is greater than a first preset threshold and less than a second preset threshold, and the three-dimensional coordinate is within the suspicious region, determine a target height corresponding to the object type; and
in response to determining that the initial height matches the target height, determine that the target object is an obstacle; or
in response to determining that the initial height does not match the target height, determine that the target object is not an obstacle.

10. The mobile robot according to claim 8, wherein the first feature information comprises a number of echo signals and a three-dimensional coordinate, the second feature information comprises a suspicious region and an object color, and when determining whether the target object is an obstacle based on the first feature information and the second feature information, the one or more processors are configured to:

in response to determining, based on the number of echo signals, that a region where the target object is located is an echo-free region and the three-dimensional coordinate is within the suspicious region, determine whether a color of the target object is black; and
in response to determining that the color of the target object is black, determine that the target object is an obstacle; or
in response to determining that the color of the target object is not black, determine that the target object is not an obstacle.

11. The mobile robot according to claim 8, wherein the first feature information comprises an initial height, and the one or more processors are further configured to:
in response to determining that the initial height is greater than or equal to a second preset threshold, determine that the target object is an obstacle.

12. The mobile robot according to any one of claims 8-11, wherein when determining the first feature information of the target object in the target scene based on the laser data, the one or more processors are configured to:

determine, based on the laser data, a two-dimensional coordinate and a number of echo signals of the target object;

determine, based on the two-dimensional coordinate, a pose of the laser sensor, and a pose of the mobile robot, a three-dimensional coordinate of the target object;

determine, based on the three-dimensional coordinate, an initial height of the target object; and

determine, based on the number of echo signals, the three-dimensional coordinate, and the initial height, the first feature information of the target object.

13. The mobile robot according to any one of claims 8-11, wherein when determining the second feature information of the candidate object in the target scene based on the image data, the one or more processors are configured to:

input the image data into a trained target network model to obtain a position coordinate box of the candidate object, an object type of the candidate object, and an object color of the candidate object in the image data;

select a candidate feature point within the position coordinate box, and select a target feature point corresponding to the candidate feature point from previous image data before the image data;

determine, based on a pixel coordinate of the candidate feature point and a pixel coordinate of the target feature point, a three-dimensional coordinate for the candidate feature point;

determine, based on the three-dimensional coordinate, a suspicious region for the candidate object; and

determine, based on the suspicious region, the object type, and the object color, the second feature information.

14. The mobile robot according to claim 13, wherein the position coordinate box comprises a plurality of candidate feature points, and a three-dimensional coordinate for each of the plurality of candidate feature points comprises an abscissa, an ordinate, and an applicate, wherein when determining, based on the three-dimensional coordinate, the suspicious region for the candidate object, the one or more processors are configured to:

select, from abscissas for the plurality of candidate feature points, a minimum abscissa and a maximum abscissa, select, from ordinates for the plurality of candidate feature points, a minimum ordinate and a maximum ordinate, and select, from applicates for the plurality of candidate feature points, a minimum applicate and a maximum applicate; and

determine, based on the minimum abscissa, the maximum abscissa, the minimum ordinate, the maximum ordinate, the minimum applicate, and the maximum applicate, the suspicious region for the candidate object.

15. A mobile robot, comprising: one or more processors and one or more machine-readable storage media, wherein the one or more machine-readable storage media store machine executable instructions that can be executed by the one or more processors, and the one or more processors execute the machine executable instructions to implement the method according to any one of claims 1-7.

16. A machine readable storage medium, wherein the machine readable storage medium stores computer instructions, and when the computer instructions are executed by one or more processors, the method according to any one of claims 1-7 is implemented.

Determine first feature information of a target object in a target scene based on laser data ⌐101

Determine second feature information of a candidate object in the target scene based on image data ⌐102

Determine whether the target object is an obstacle based on the first feature information and the second feature information ⌐103

FIG. 1

RGB camera

Single line laser sensor

FIG. 2

Acquire image data of the target scene through an image sensor, where the image data can be RGB images ⌐301

Input the RGB image into the trained target network model to obtain a position coordinate box, an object type, and an object color of a candidate object within the RGB image ⌐302

Select a candidate feature point in the position coordinate boxd from the RGB image, and select the target feature point corresponding to the candidate feature point from the previous RGB image before the RGB image ⌐303

For each candidate feature point, based on the pixel coordinate of the candidate feature point and the pixel coordinate of the target feature point, determine the three-dimensional coordinate corresponding to the candidate feature point ⌐304

Based on the three-dimensional coordinate, determine a suspicious region for the candidate object ⌐305

Based on the suspicious region, object type, and object color, determine the second feature information of the candidate object ⌐306

FIG. 3

FIG. 4A

FIG. 4B

FIG. 4C

FIG. 5

| Acquire laser data for the target scene through a laser sensor, and the two-dimensional coordinate and determine the number of echo signals of the target object based on the laser data | 601 |

Determine the three-dimensional coordinate of the target object based on the two-dimensional coordinate, the pose of the laser sensor, and the pose of the mobile robot — 602

Determine the initial height of the target object based on the three-dimensional coordinate — 603

Based on the number of echo signals, the three-dimensional coordinate, and the initial height, determine the first feature information of the target object — 604

FIG. 6

FIG. 7

FIG. 8

Mobile robot

Processor 93

Laser sensor 91

Image sensor 92

FIG. 9

## INTERNATIONAL SEARCH REPORT

| International application No. |
| --- |
| **PCT/CN2023/074367** |

### A. CLASSIFICATION OF SUBJECT MATTER

G06V20/10(2022.01)i

According to International Patent Classification (IPC) or to both national classification and IPC

### B. FIELDS SEARCHED

Minimum documentation searched (classification system followed by classification symbols)

IPC: G06V

Documentation searched other than minimum documentation to the extent that such documents are included in the fields searched

Electronic data base consulted during the international search (name of data base and, where practicable, search terms used)

CNABS, CNTXT, CNKI, ENTXT, ENTXTC, DWPI: 障碍物, 检测, 机器人, 传感器, 图像, 激光, obstacle, obstruction, detect +, robot, sensor, image, laser

### C. DOCUMENTS CONSIDERED TO BE RELEVANT

| Category* | Citation of document, with indication, where appropriate, of the relevant passages | Relevant to claim No. |
| --- | --- | --- |
| PX | CN 114612786 A (HANGZHOU EZVIZ SOFTWARE CO., LTD.) 10 June 2022 (2022-06-10) entire document | 1-16 |
| X | CN 112560580 A (TENCENT TECHNOLOGY (SHENZHEN) CO., LTD.) 26 March 2021 (2021-03-26) description, paragraphs [0060]-[0062] | 1, 4, 8, 11, 15-16 |
| A | CN 113096183 A (WUHAN UNIVERSITY OF SCIENCE AND TECHNOLOGY) 09 July 2021 (2021-07-09) entire document | 1-16 |
| A | US 2021049376 A1 (ANKOBOT (SHENZHEN) SMART TECHNOLOGIES CO., LTD.; ANKOBOT (SHANGHAI) SMART TECHNOLOGIES CO., LTD.) 18 February 2021 (2021-02-18) entire document | 1-16 |
| A | WO 2022007591 A1 (DREAME INNOVATION TECHNOLOGY (SUZHOU) CO., LTD.) 13 January 2022 (2022-01-13) entire document | 1-16 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 March 2023** | **22 March 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2023/074367**

| Patent document cited in search report | | | Publication date (day/month/year) | Patent family member(s) | | | Publication date (day/month/year) |
|---|---|---|---|---|---|---|---|
| CN | 114612786 | A | 10 June 2022 | None | | | |
| CN | 112560580 | A | 26 March 2021 | HK | 40040684 | A0 | 06 August 2021 |
| CN | 113096183 | A | 09 July 2021 | None | | | |
| US | 2021049376 | A1 | 18 February 2021 | US | 11042760 | B2 | 22 June 2021 |
| | | | | US | 2021182579 | A1 | 17 June 2021 |
| | | | | WO | 2021026831 | A1 | 18 February 2021 |
| WO | 2022007591 | A1 | 13 January 2022 | CN | 111743464 | A | 09 October 2020 |

Form PCT/ISA/210 (patent family annex) (July 2022)